# EUROPEAN PATENT APPLICATION

(11) **EP 1 265 170 A1**
(43) Date of publication of application: **11.12.2002**
(21) Application number: 01410064.8
(22) Date of filing: 08.06.2001
(51) Int. Cl.: G06F 17/60

(54) **Method of maintaining a user profile**

(71) Applicant: Hewlett-Packard Company, Palo Alto, CA 94304 (US)
(72) Inventor: Chalon, Denis, 38000 Grenoble (FR)
(74) Representative: Lloyd, Richard Graham

(57) **Abstract**

A method of maintaining a user profile in accordance with requested information comprising the steps of;
a) searching the requested information for a profile tag,
b) reading the user profile in accordance with the profile tag to locate user preference information,
c) generating a profile enquiry,
d) receiving a user response to the profile enquiry, and
e) maintaining the user profile in accordance with the user response.

## Description

### Field of the Invention

This invention relates to a method of maintaining a user profile and a module operable to maintain a user profile in accordance with an information request, particularly but not exclusively where the information request is generated over the Internet.

### Background of the Invention

It is known and desirable that when a user requests information from Internet resources such as the World Wide Web and file transfer protocol (FTP) libraries, the user's browsing experience may be personalised in accordance with certain characteristics, preferences and interests (for example), which are peculiar to the user, hereinafter generally referred to as "user preference information". Such characteristics, preferences and interests may be stored in a user profile.

Such user profiles can of necessity contain substantial quantities of information, and it is desirable that the generation, modification and amendment (i.e.: maintenance or feeding) of such user profiles be made as simple and unintrusive for the user as possible. It might for example be envisaged that a user would establish a user profile by supplying comprehensive details of their interests or preferences, for example by completing a form. It will be apparent however that establishing such a user profile would be a long and intrusive process. to avoid the information contained in the user profile becoming to out-dated, it would be necessary to establish some means of maintaining the user profile.

It might also be envisaged that a profile be built up by tracking the information viewed by the user while browsing, but the resulting profile might not accurately reflect the interests or preferences of the user.

An alternative method of personalising users' browsing experiences involves the use of so-called cookies - in essence, messages stored by a client application (such as a web browser) and which are passed to the server side of the system whenever the browser requests information (such as a web page) from the server concerned.

However, although the use of cookies is effective, in some cases, to expedite the browsing experience, in that, for example, repeated form-filling can be avoided, the use of such client-side information - which can be stored for very long periods of time on the browser concerned - gives rise to serious privacy concerns, as the user/client data provided by the cookie must inevitably be exposed to the server whenever an information request is dispatched by the client application. Also, a separate cookie might be required by each source or site accessed by the user.

An aim of the present invention is to overcome or reduce the above problems.

### Summary of the Invention

According to a first aspect of the invention we provide a method of maintaining a user profile in accordance with requested information comprising the steps of;
a) searching the requested information for a profile tag,
b) reading the user profile to locate user preference information in accordance with the profile tag,
c) generating a profile enquiry,
d) receiving a user response to the profile request, and
e) maintaining a user profile in accordance with the user request.

Preferably, no profile enquiry is generated if the user preference information is present in the user profile.

The step of searching the requested information may comprise the step of searching for an identifier part of the profile tag.

The profile tag may comprise a location indicator and the step of reading the user profile may comprise the step of reading the user profile at a location specified by the location indicator.

The step of maintaining the user profile may comprise storing user preference information in the user profile in accordance with the location indicator.

The profile tag may comprise profile enquiry information and the step of generating the profile enquiry may comprise generating a profile request in accordance with the profile enquiry information.

The requested information may comprise a hypertext document and the profile tag may comprise a meta tag.

According to a second aspect of the invention, we provide a module for maintaining a user profile in accordance with requested information, the module being operable to perform a method according to the first aspect of the invention.

According to a third aspect of the invention, we provide a module for maintaining a user profile in accordance with requested information, the module being operable to;
a) search the requested information for a profile tag,
b) read the user profile in accordance with the profile tag to locate user preference information,
c) generate a profile enquiry,
d) receive a user response to the profile enquiry, and
e) maintain the user profile in accordance with the user response.

According to a fourth aspect of the invention we provide an Internet browser comprising a module according to the second or third aspect of the invention.

According to the fifth aspect of the invention, we provide a document comprising a profile tag, the profile tag comprising user profile location information.

The user profile location information may comprise a location indicator specifying a location in a user profile.

The profile tag may comprise profile enquiry information.

The profile tag may comprise an identifier part.

The document may comprise a hypertext document and the profile tag may comprise a meta tag.

A document according to the fifth aspect of the invention may thus be read by a module according to the second or third aspect of the invention and/or in accordance with the method of the first aspect of the invention to update a user profile.

### Brief Description of the Drawings

The invention will now be described by way of example only with reference to the accompanying drawings wherein:
Figure 1 is a schematic illustration of the present invention
Figure 2 is a flow chart of a method according to the first aspect of the invention, and
Figure 3 is an illustration of an example profile enquiry generated in accordance with the present invention.

### Detailed Description of the Preferred Embodiments

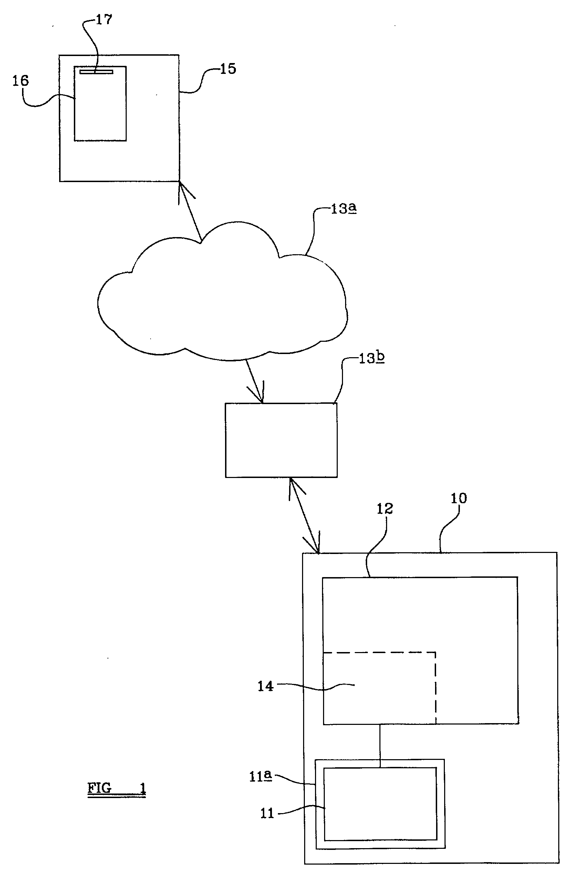

Figure 1 shows in diagrammatic form a user's computer 10 on which a user profile 11 is stored, for example, on a hard disk 11a. The computer 10 is provided with an Internet browser 12 which is used to browse the Internet 13a, in the present example via a proxy server 13b. A module according to the present invention is shown diagrammatically at 14, in the present example provided as part of the browser 12. A source database running on a server 15 may be addressed in standard fashion by the browser 12.

In the present example, the browser 12 sends a request via the proxy server 13b and the Internet 13a to the server 15 for requested information, in the present example comprising a document 16 according to the present invention and in this particular example comprising a hypertext document. The information request generated by the browser 12 may be modified in accordance with information stored in the user profile 11. When the requested information is received by the browser 12, the browser 12 may similarly modify the requested information before displaying it to the user in accordance with the user profile 11.

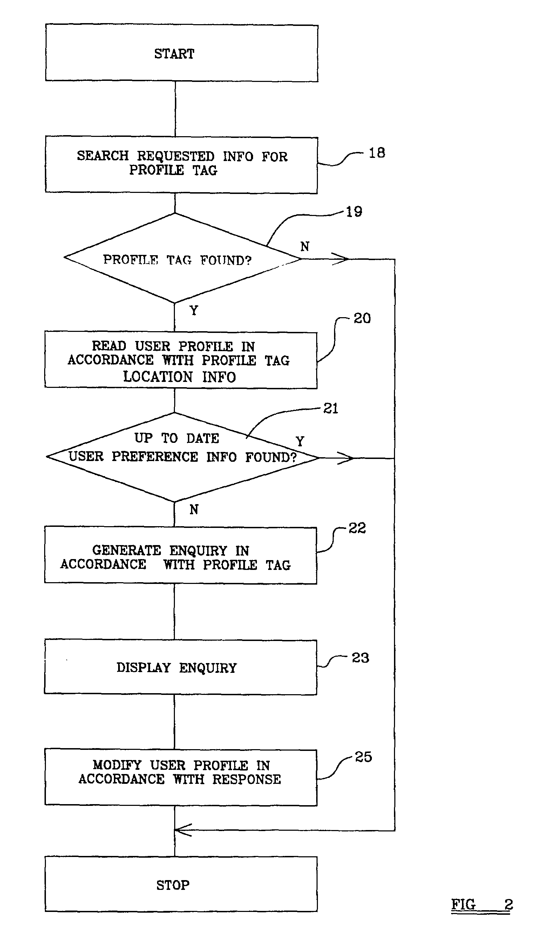

On receipt of the requested information 16 by the browser 12, the module 14 is operable as set out in the flow chart of Figure 2. At step 18, the module 14 searches the document 16 for a profile tag 17. At step 19, if no profile tag is present in the document, then the module takes no further action.

In the present example, the profile tag 17 has the format <(identifier) (user profile location) (profile enquiry information)>. Where the requested information 16 is a hypertext document, the profile tag 17 may comprise a meta tag included in the header of the requested information 16 in standard fashion. Thus, for example a profile tag concerned with volleyball may have the form <META name = "profile feeder" content = "URL = user profile/preferences/hobbies/sports/volleyball URL = user profile/preferences/hobbies/tv/preferred programs, QUESTION = do you like volleyball?, answer 1 = yes, answer 2 = no">. The module 14 in this case looks for a meta tag with the name "profile feeder".

The module 14 then reads the user profile at step 20 in accordance with the profile tag to see whether the user profile already contains specific user preference information to which the profile tag relates. In this example, it is assumed that the user profile 11 has a tree structure and the module 14 reads the user profile 11 at the location specified in the (user profile location) part of the "contents" section of the profile tag to see whether the specific user preference information is present.

The user profile 11 may comprise, for example a file structured as set out below, wherein each value is located at a given path.

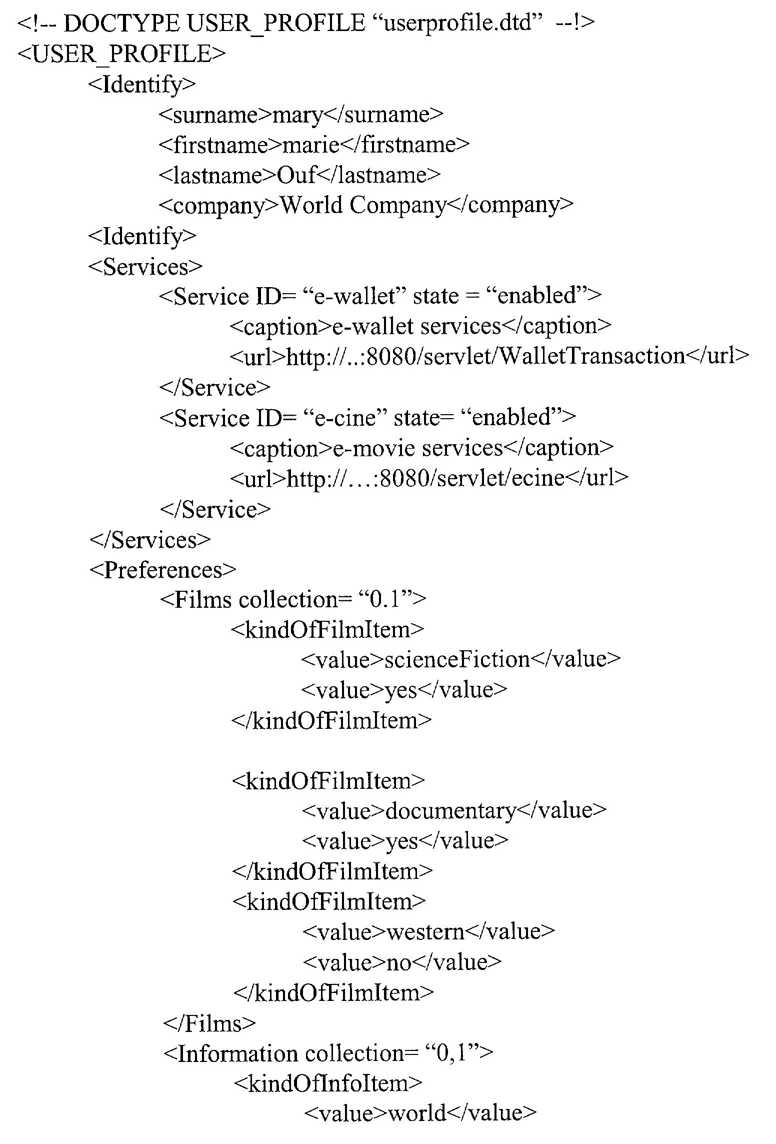

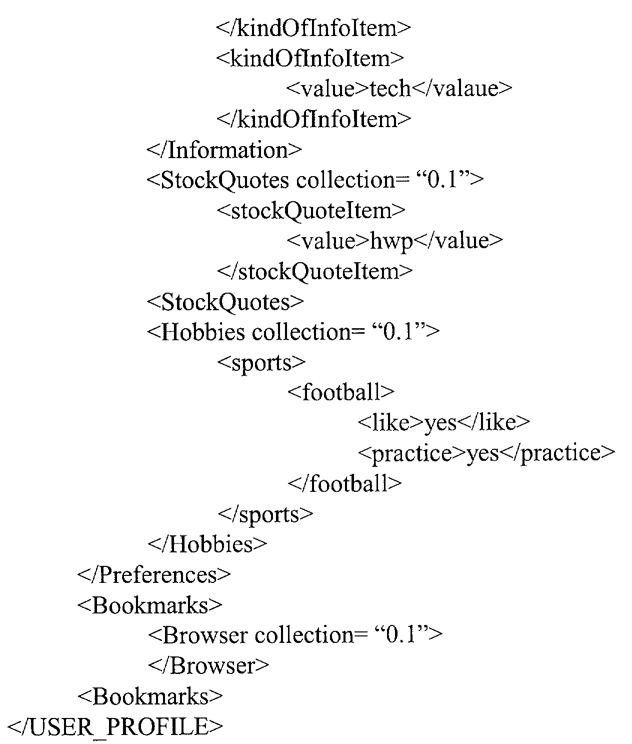

In the simple example of a user profile shown above, the profile includes user profile information including the user's identity, on-line services used by the user, and preferences including films and hobbies. The profile has a simple tree structure, so that the user's preference for, for example Westerns (no) is located at preferences/films/westerns.

With reference to the example meta tag described above, the two paths (URLs) relating to volleyball are not present in the profile. The user's preference in relation to football is present at user profile/preferences/sport/football, but there is no volleyball information. If the user preference information had been found at step 21, then the module 14 would have taken no further action. Thus, the user would not be repeatedly asked the same question.

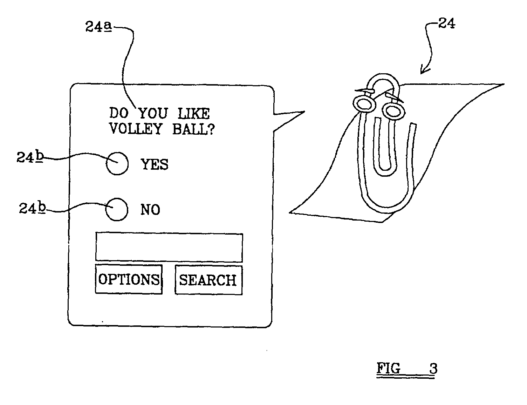

As the user preference information is not present, in this example since the specified URL path does not exist in the user profile 11, the module 14 then generates a profile enquiry at step 22. The profile enquiry information provided in the profile tag 17 includes the text of a question ("Do you like volleyball?") and the possible answers, "yes" and "no" in this case. At step 23, the module displays the profile enquiry to the user, including the question text and alternative answers. The profile enquiry may use a standard format, for example the assistant 24 shown in Figure 3, displaying the question text 24a and answers 24b. The module 14 receives the user response (i.e. the user selects "yes" or "no") and at step 25 saves the response in the user profile.

In the present example, the answer will be stored at the new tree paths user profile/ preferences/ sports/ volleyball and/or user profile/ preferences/ tv/preferred programs . On a subsequent visit to the same site, the module 14 will locate the profile tag 17 as above, read the user profile 11 and on locating the stored user preference information will not display the user enquiry.

Although a user profile having a simple tree structure is described above, it will be apparent that any suitable structure may be provided for the user profile. It is only necessary that the profile tag is in an appropriate format consistent with the user profile structure and understand by the module 14 to enable the module 14 to read the profile and update the profile if necessary.

It will be apparent that any other manner of addressing a user profile may be used as appropriate. The user profile could for example be addressed using keywords, and the appropriate keywords would be included in the user profile location part of the profile tag 17.

Depending on the user profile structure, links or aliases could be available, such that, for example, user preference information saved to one location is also saved to one or more other locations. In the above example, any information stored at path user profile/preferences/games/volleyball might be also automatically stored at user profiles/preferences/tv/preferred programs even if the latter is not specified in the profile tag. User profile information might be thus stored in a preferred location in the user profile and also in a number of subordinate alternative locations which are updated at the same time as the preferred location, in which case the profile tag need only include the path of the preferred location.

It will be apparent that it is desirable for the person responsible for an information source to provide appropriate profile tags in the information to update the user profile 11, so that when the user subsequently uses the browser and any request is modified in accordance with the profile, the likelihood of the user returning to the source will be enhanced.

The present example shows the user profile being located on the hard drive of the user's own computer, but it will be apparent that a user profile may be kept on the proxy server 13b, and updated in a similar manner, or even may be held on the server 15 and updated when the user visits the site. In the latter case, the server 16 will require a suitable user identifier to be able to update a profile corresponding to that user. This would be simple to facilitate where, for example, the source in question is password protected or requires the user to identify themselves in some other way, or by for example placing a cookie in know manner on the computer 10 for subsequent identification of the user.

Where a user profile is present it might be envisaged that the computer 10 be provided with one or more API's to read and modify the user profile. Where such API's are present, the module 14 could invoke an appropriate API to read and/or modify the user profile, rather than reading and modifying the user profile directly. A simplistic API to access a profile could for example be:
profile.access (location) which returns user preference information from a given location in the user profile,
profile.query (query) which returns an array of locations relevant to the query, and
profile.adddata (location, user preference information) which modifies the user profile at the specified location in accordance with the user preference information and returns a status.

It will be apparent that the user profile may contain any other information as appropriate, for example the user's nationality, the configuration of the computer 10, preferred languages, domains or information sources, or any other preference information as desired.

The information that is stored in the user profile may comprise obsolescence data, such that, for example, the user is re-asked a specific question when they revisit a relevant site after a certain period of time has elapsed, or after a specific date at which the information becomes outdated. The profile enquiry information may also not be limited to a single question so that a different question may be asked following a subsequent request for the same information depending on a user's response to an earlier profile enquiry. A profile enquiry may be made in any appropriate way, not for example limited to that shown in Figure 3, for example by speech synthesis and recognition.

It will be apparent that the present invention may be used with any suitable user profile structure.

A user profile maintained by the present invention will thus be extended and maintained gradually in response to the user's browsing habits and so will not require a time intensive and intrusive setting-up process or maintenance process. Little or no infrastructure is required on the server and the invention is easily integrated into a proxy server system.

Although the present example refers to a document comprising a hypertext document and a profile tag comprising a meta tag, it will be apparent that the invention may be used in conjunction with any appropriate form of profile tag embedded in any document in an appropriate format or in information of any format as desired.

In the present specification "comprise" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of maintaining a user profile in accordance with requested information comprising the steps of;
a) searching the requested information for a profile tag,
b) reading the user profile in accordance with the profile tag to locate user preference information,
c) generating a profile enquiry,
d) receiving a user response to the profile enquiry, and
e) maintaining the user profile in accordance with the user response.

2. A method according to claim 1 wherein no profile enquiry is generated if the user preference information is present in the user profile.

3. A method according to claim 1 or claim 2 wherein the step of searching the requested information comprises the step of searching for an identifier part of the profile tag.

4. A method according to claim 1 or claim 2 or claim 3 wherein the profile tag comprises a location indicator and the step of reading the user profile comprises the step of reading the user profile at a location specified by the location indicator.

5. A method according to claim 4 wherein the step of maintaining the user profile comprises storing user preference information in the user profile in accordance with the location indicator.

6. A method according to any one of claims 1 to 5 wherein the profile tag comprises profile enquiry information and the step of generating the profile enquiry comprises generating a profile enquiry in accordance with the profile request information.

7. A method according to any one of claims 1 to 6 wherein the requested information comprises a hypertext document and where the profile tag comprises a meta tag.

8. A module for maintaining a user profile in accordance with requested information, the module being operable to perform a method according to any one of claims 1 to 7.

9. A module for maintaining a user profile in accordance with requested information, the module being operable to;
a) search the requested information for a profile tag,
b) read the user profile in accordance with the profile tag to locate user preference information;
c) generate a profile enquiry,
d) receive a user response to the profile enquiry, and
e) maintain the user profile in accordance with the user response.

10. An Internet browser comprising a module according to claim 8 or claim 9.

11. A document comprising a profile tag, the profile tag comprising user profile location information.

12. A document according to claim 11 wherein the user profile location information comprises a location indicator specifying a location in a user profile.

13. A document according to claim 11 or claim 12 wherein the profile tag comprises enquiry information.

14. A document according to any one of claims 11 to 13 wherein the profile tag comprises a identifier part.

15. A document according to any one of claims 11 to 14 wherein the document comprises a hypertext document and the profile tag comprises a meta tag.
